# EUROPÄISCHE PATENTSCHRIFT

(11) **EP 2 284 938 B1**
(45) Veröffentlichungstag und Bekanntmachung des Hinweises auf die Patenterteilung: **07.11.2012**
(21) Anmeldenummer: 10006898.0
(22) Anmeldetag: 03.07.2010
(51) Int. Cl.: H01M 8/06, F23G 7/07, H01M 8/04

(54) **Nachbrenner für erdgasbasierte Brennstoffzellenheizgeräte**
Afterburner for natural gas based fuel cell heaters
Post-brûleur pour appareils de chauffage à pile à combustible à base de gaz naturel

(30) Priorität: 13.07.2009 AT 10942009
(43) Veröffentlichungstag der Anmeldung: 16.02.2011
(73) Patentinhaber: Vaillant GmbH, 42859 Remscheid (DE)
(72) Erfinder: Badenhop, Thomas, 51688 Wipperfürth (DE)
(74) Vertreter: Hocker, Thomas

(56) Entgegenhaltungen:
- DE-A1-102005 062 926
- JP-A- 59 203 372
- JP-B- 2 501 666
- US-A- 1 789 812
- US-A1- 2009 176 136

## Beschreibung

Die Erfindung betrifft einen Nachbrenner für erdgasbasierte Brennstoffzellenheizgeräte in der Hausenergieversorgung.

In Kraft-Wärme-Kopplungsanlagen (KWK) wird die anfallende Abwärme bei der Stromerzeugung genutzt, um andere Verbraucher mit thermischer Energie zu versorgen. Bei Mikro- Kraft-Wärme-Kopplungsanlagen wird oftmals die Abwärme genutzt, um Gebäude mit Wärme zu versorgen. Als Stromerzeuger hier kommen verschiedene Energiewandler in Betracht, die einen Brennstoff in Strom und Wärme umwandeln können, wie z.B. Gasmotoren und -turbinen sowie Brennstoffzellen.

Alle technischen Brennstoffzellen benötigten Wasserstoff als Brennstoff, wobei sich die verschiedenen Brennstoffzellentypen u.a. in ihren Anforderungen an die Wasserstoffqualität und Reinheit unterscheiden. Allen Brennstoffzellen ist gemeinsam, dass diese mit einem Überschuss an Wasserstoff betrieben werden müssen, um ein Absinken der Klemmspannung zu verhindern. Dies bedeutet aber, dass am Anodenausgang der Brennstoffzelle ein sogenanntes Brennstoffzellen-Restgas oder Anodenabgas anliegt, welches noch Wasserstoff und ggf. noch andere brennbare Anteile enthält. Aus Effizienz- und Immissionsschutzgründen müssen diese brennbaren Anteile dem Anodenabgas entzogen werden.

Um den Wasserstoffüberschuss an der Anode gering zu halten, muss ein so genanntes Schwachgas nachverbrannt werden, welches nur geringe brennbare Anteile enthält. Bei den besagten Schwachgasen sind die brennbaren Gase (z.B. Methan oder andere gasförmige Kohlenwasserstoffe, Wasserstoff und/oder Kohlenmonoxid) mit nicht brennbaren Komponenten, wie z. B. Stickstoff (aus der Luft), Wasserdampf oder Kohlendioxid verdünnt. In manchen Anwendungen kann es vorteilhaft sein, das Anodenabgas mit der Kathodenabluft gemeinsam nachzuverbrennen.

Ein Sauerstoffüberschuss muss auf der Kathodenseite eingestellt werden, um den Sauerstoffpartialdruck aufrechtzuerhalten und um ein Absinken der Klemmspannung zu verhindern. Die Kathodenabluft sollte daher genügend Sauerstoff enthalten, damit eine vollständige Oxidation des Anodenabgases erfolgen kann.

Auch wenn die Kathodenabluft nicht zur Oxidation für die Nachverbrennung, sondern Luftsauerstoff als Verbrennungsluft genutzt wird, kommt es dennoch zu einer weiteren Verdünnung des Anodenabgases durch den Stickstoffanteil der Luft.

Schwachgase können oftmals nicht mehr stabil homogen verbrannt werden, da deren Aktivität für eine homogene Verbrennung nicht mehr ausreicht. Für eine stabile und sichere Nachverbrennung können daher weitere brennbare Anteile dem Schwachgas hinzugefügt werden, um die Aktivität zu steigern. Auch durch der Einsatz von Katalysatoren und eine Vorwärmung des Anodenabgases und der Verbrennungsluft kann die Nachverbrennung stabiler gestalten werden.

Da das Erdgas zu großen Anteilen aus Methan besteht, bleiben auch nach dem Reformierungsverfahren geringfügige Anteile vorhanden. Diese Methanrestanteile werden in vielen Brennstoffzellentypen nicht weiter umgesetzt. Somit passieren die Methanrestanteile die Anode, ohne dass diese durch die Brennstoffzellenreaktion abgebaut werden. Diese Spuren an Methan liegen hinter der Anode an und müssen im Nachbrenner umgesetzt werden.

Der Erfindung liegt die Aufgabe zugrunde, einen Nachbrenner für Brennstoffzellensysteme zur Verfügung zu stellen, mit dem die Nachverbrennung vom Brennstoffzellen-Restgas und den darin enthaltenen Spuren an Methan und Kohlenwasserstoffen zu optimieren, so dass keine oder deutlich reduzierte brennbare Anteile an die Umgebung abgegeben werden.

Zu dem soll die Anordnung einen schnellen und zuverlässigen Start des Nachbrenners ermöglichen, da insbesondere während des Startbetriebes des Reformers, dieser einen noch nicht der Gleichgewichtslage entsprechenden Methanumsatz aufweist und somit größere Mengen an Methan oder Kohlenwasserstoffen im Nachbrenner umgesetzt werden müssen.

Erfindungsgemäß wird dies gemäß den Merkmalen des Anspruchs 1 mit einem Nachbrenner eines Brennstoffzellensystems zum Nachverbrennen vom Brennstoffzellen-Restgas mit Hilfe eines Nachbrenner-Katalysators gelöst, wobei der Nachbrenner-Katalysator aus zwei Nachbrenner-Katalysatorstufen besteht, die der Zufuhr des Brennstoffzellen-Restgases stromabwärts angeordnet sind und der stufenweise Umsetzung des Brennstoffzellen-Restgases dienen.

Vorteilhafte Ausgestaltungen ergeben sich durch die Merkmale der abhängigen Ansprüche. Durch den erfindungsgemäßen zweistufigen Nachbrenner wird eine zuverlässige Reduktion der Emissionen unter die geforderten Grenzwerte für Brennstoffzellensysteme ermöglicht. Dabei erfolgt die Erwärmung der Nachbrenner-Katalysatorstufen gleichmäßig.

Die katalytische Nachverbrennung durch den erfindungsgemäßen zweistufigen Nachbrenner ermöglicht einen einfachen Aufbau und Betrieb des Brennstoffzellensystems. Dabei ist dieser Nachbrenner wartungsarm und hat einen hohen Wirkungsgrad. Der Einsatz selektiver Nachbrennerkatalysatoren ist ebenfalls möglich.

Die Erfindung wird nun anhand der Figuren detailliert erläutert. Hierbei zeigen
- Figur 1: grafische Darstellung der Abhängigkeit zwischen Nachbrennertemperatur und Methanumsatz und
- Figur 2: eine Anordnung des erfindungsgemäßen Nachbrenners.

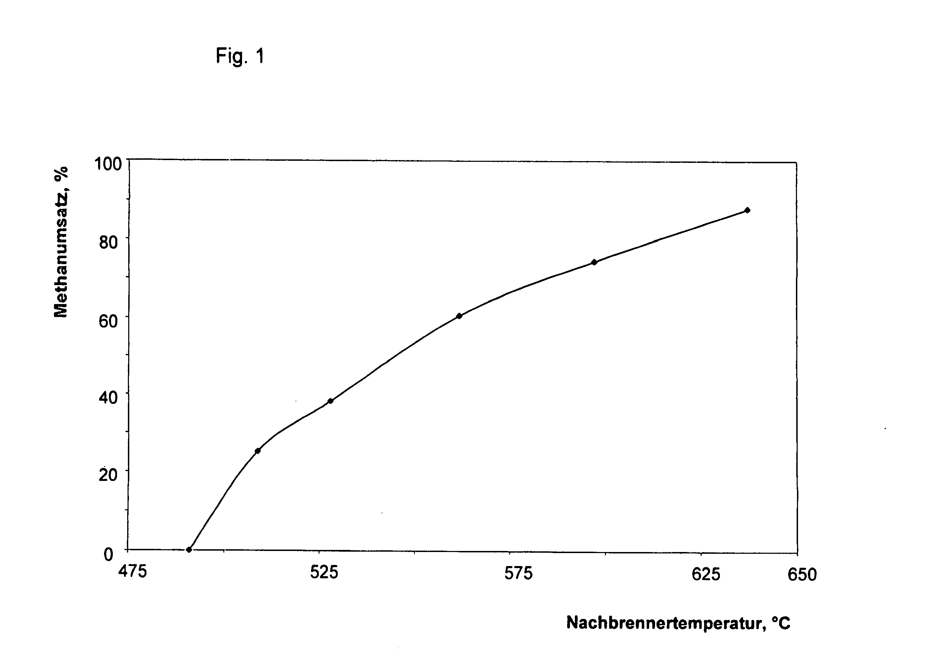

Figur 1 zeigt, dass die katalytische Methanverbrennung temperaturabhängig ist und der Methanumsatz im katalytischen Nachbrenner eines Brennstoffzellensystems mit der Betriebstemperatur steigt. Die katalytische Methanverbrennung erfolgt bei Temperaturen oberhalb von 650°C deutlich besser.

Für die Methanumsetzung sind normalerweise Temperaturen von 450°C bis 750°C erforderlich. Ein Umsatz von Methan von mehr als 80% an Platin-Katalysatoren im katalytischen Nachbrenner wird bei einer Nachbrennertemperatur größer als 600°C erzielt.

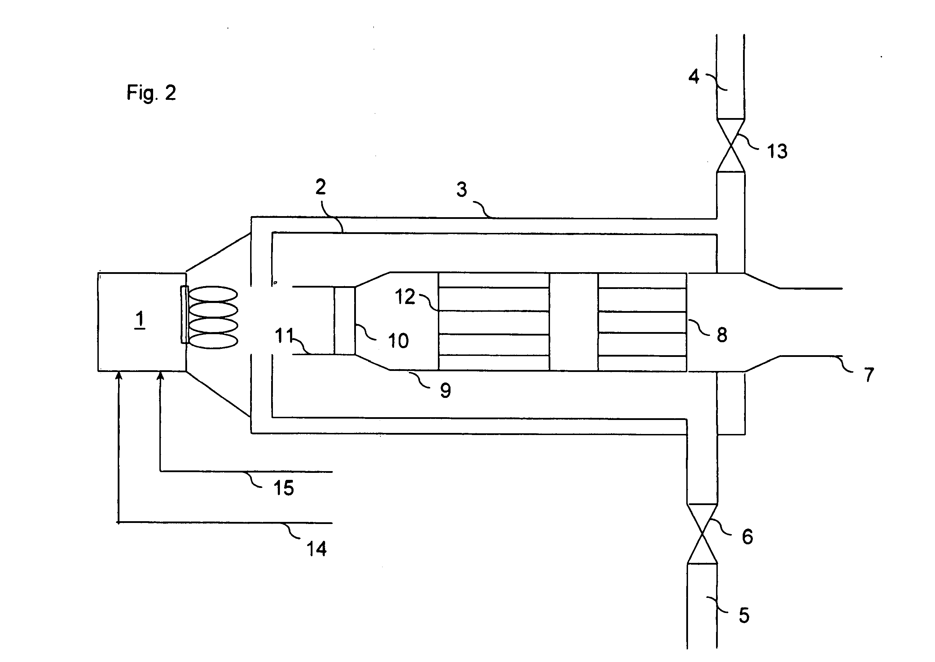

Ein solcher katalytischer Abgasbrenner ist beispielsweise aus der DE 10 2005 062 926 bekannt. Dort wird Methan im Betriebstemperaturbereich von 500°C bis 700°C umsetzt. Wie in Figur 2 dargestellt, enthält der erfindungsgemäße katalytische Nachbrenner 9 zum Nachverbrennen vom Brennstoffzellen-Restgas mit Hilfe eines Nachbrenner-Katalysators zwei Nachbrenner-Katalysatorstufen 8, 12. Die Nachbrenner-Katalysatorstufen 8, 12 sind der Zufuhr des Brennstoffzellen-Restgases stromabwärts derart angeordnet, dass die Umsetzung des Brennstoffzellen-Restgases stufenweise erfolgt.

Dabei ist die erste Katalysatorstufe 12 zur Umsetzung von Wasserstoff und Kohlenmonoxid und die nachgeschaltete Katalysatorstufe 8 - für die Umsetzung von Methan und höheren Kohlenwasserstoffen vorgesehen. Durch die freiwerdende Reaktionswärme bei der Nachverbrennung von Wasserstoff und Kohlenmonoxid erwärmt sich der Gasstrom. Ein Teil dieser Wärme kann zur Vorwärmung des Anodenabgases und/oder zur Vorwärmung des Oxidationsmittels, z.B. der Kathodenabluft oder Nachbrennerluft genutzt werden. Ein anderer Teil dient zur Vorwärmung der zweiten Katalysatorstufe 8.

In der zweiten Stufe ist ein für die Nachverbrennung von Methan und höheren Kohlenwasserstoffen optimierter Katalysator 8 eingesetzt, der eine ähnliche Zündtemperatur wie der Katalysator für Wasserstoff- und Kohlenmonoxidoxidation aufweist.

Zur schnelleren Erwärmung kann dem Nachbrenner 9 ein Startbrenner 1 vorgeschaltet sein, der auch das restliche Brennstoffzellensystem während des Startbetriebes mit Wärme versorgt. Der Startbrenner 1 kann als Diffusionsbrenner, teilvormischender Brenner, vollvormischender Brenner oder Porenbrenner ausgeführt sein und wird über Leitungen 14, 15 mit Erdgas und Verbrennungsluft versorgt.

Während des Startbetriebes des Brennstoffzellensystems wird der Startbrenner 1 gezündet und der Methan bzw. das entschwefelte Erdgas mit Luftsauerstoff oxidiert. Seine Abgase erwärmen nun den katalytischen Nachbrenner 9 auf eine Temperatur oberhalb von 700°C. Dabei wird den erwärmten Abgasen des katalytischen Nachbrenners 9 über eine Zuluftleitung 4 Luft zugegeben, damit die Abgastemperatur eine zulässige Abgastemperatur nicht überschreitet und die stromabwärts angeordneten Katalysatorstufen 12, 8 nicht schädigt. Eine übliche Grenztemperatur für edelmetallhaltige Nachbrennerkatalysatoren liegt zwischen 800°C bzw. 1.000°C. Der zu zumischende Luftstrom 4 wird so geregelt, dass in der Aufheizphase die Temperatur in einer Mischstelle 11 des Nachbrenners 12 eine Temperatur von 750°C nicht überschreitet. Zum anderen kann dadurch eine Rückströmung in den Luftweg des Brennstoffzellensystems vermieden werden. Eine vorgesehene Rückstromsicherung 13 ist in diesem Fall nicht unbedingt notwendig. Eine vorgesehene Rückstromsicherung 6 ist in jeden Fall zur Vermeidung vom Eindringen der Startbrennerabgasen in den Anodenweg des Brennstoffzellensystems erforderlich.

Nachdem das wasserstoffhaltige Gas mit den Abgasen auf die erforderliche Betriebstemperatur für eine saubere und vollständige Umsetzung dem katalytischen Nachbrenner 9 gebracht wurde, wird der Startbrenner 1 abgeschaltet. Das wasserstoffreiche Gas von der Anode oder einem Reformer wird katalytisch nachverbrannt. Dabei wird das wasserstoffreiche Gas über die Leitung 5 der Nachbrennereinheit 9 zugeführt und in einem Wärmeübertrager 2 vorgewärmt. Die Nachbrennereinheit 9 wird über eine weitere Leitung 4 mit Luft versorgt und in einem Wärmeübertrager 3 vorgewärmt.

Einer Abgasleitung 7 können stromabwärts ebenfalls Wärmeübertrager angeordnet sein, die die Wärme des Abgases an das Brennstoffzellensystem und/oder an das Heizungssystem des Gebäudes übertragen.

Die erste Nachbrenner-Katalysatorstufe 12 ist für die katalytische Nachverbrennung von Wasserstoff und Kohlenmonoxid optimiert. Diese enthält vorzugsweise edelmetallhaltige Elemente oder seltene Erden als aktive Komponenten. Als Katalysator kann vorzugsweise ein Platin-Katalysator, ein Platin-Palladium-Katalysator, ein Platin-Palladium-Rhodium-Katalysator, ein Platin-Ruthenium-Katalysator, ein Platin-Palladium-Ruthenium-Katalysator oder ein Platin-Palladium-Lanthan-Katalysator eingesetzt werden.

Solche Katalysatoren können Anteile von Mangan, Kobalt, Eisen, Nickel, Kupfer oder Chrom enthalten und zeichnen sich durch eine besondere Hitzebeständigkeitaus. Diese Katalysatoren sind daher besonders geeignet, da die Nachverbrennung von Kohlenwasserstoffen in der erfindungsgemäßen Anordnung bei erhöhten Temperaturen zur deren Umsatzsteigerung - wie in Bild 1 gezeigt - führt.

Die zweite Nachbrenner-Katalysatorstuffe 8 für die katalytische Nachverbrennung von Kohlenwasserstoffen, beispielsweise Methan, kann ein Erdalkalihexaaluminat-Katalysator, ein Mangan substituiertes Hexaaluminat-Katalysator, ein Rhodium-Perovskite-Katalysator oder ein Aluminium-Borat-Palladium-Katalysator sein.

Titanhaltige Katalysatoren sind für die katalytische Nachverbrennung wegen der hohen Temperaturen (oberhalb 600°C) nicht geeignet. Diese Gruppe von Katalysatoren ist aber eine interessante Alternative, wenn Methan und höhere Kohlenwasserstoffe bei Temperaturen von 400°C bis 550°C nachverbrannt werden sollen.

Die erfindungsgemäße Anordnung kann auch für die katalytische Nachverbrennung bei niedrigeren Nachbrennertemperaturen genutzt werden. Das Vorwärmen des Katalysators mittels Abgasen eines Startbrenners fällt in diesem Fall aus. Das aus dem Nachbrenner strömende nachverbrannte Gas wird elektrisch aufgeheizt, in dem stromaufwärts Heizwendel im Gasstrom angeordnet oder die Nachbrenner-Katalysatoren auf elektrisch leitendes Material angebracht sind.

Damit der Katalysator die gewünschte Betriebstemperatur erreicht, wird er auf einen elektrisch leitenden Katalysatorträger aufgebracht, z.B. ein ferritischer Stahl. Dieser Sonderedelstahl kann bis 900°C eingesetzt werden und zeichnet sich dabei durch besonders gute Wärme- und elektrische Leitfähigkeit aus. Der Nachbrennerkatalysator wird auf ein solches Material aufgebracht. Als haftvermittelnde Schicht zwischen Katalysator und metallischen Träger kann ein Hexaaluminat dienen, welches mittels eines Sol-Gel-Verfahrens aufgebracht wird. Zur Erwärmung des Katalysators auf Betriebstemperatur wird ein elektrischer Strom an den Katalysatorträger angelegt. Durch die freiwerdende Joul'sche Wärme erwärmt sich der Katalysatorträger und somit auch der Katalysator.

Vorteilhaft bei dieser Anordnung ist, dass der Katalysator gleichmäßig auf Betriebstemperatur gebracht wird. Dies begünstigt die katalytischen Reaktionen auf der Oberfläche des Katalysators. Auch während des Betriebes kann die aktive Komponente weiter elektrisch über den Katalysatorträger erwärmt werden, wenn im Teillastbereich der Katalysator auszukühlen droht.

Durch den erfindungsgemäßen Nachbrenner wird eine zuverlässige Reduktion der Emissionen unter die geforderten Grenzwerte für Brennstoffzellensysteme ermöglicht. Den zweistufigen Nachbrenner besteht dabei in seiner ersten Stufe aus einem Katalysator, der eine besonders hohe Aktivität hinsichtlich Wasserstoff und Kohlenmonoxid hat. Hier können insbesondere edelmetallhaltige Katalysatoren, wie z.B. Platin-Palladium-Systeme eingesetzt werden. Die zweite Stufe ist für die katalytische Nachverbrennung von Methan und höheren Kohlenwasserstoffen optimiert und wird auch bei höheren Temperaturen betrieben als die erste Stufe, da diese durch die Abgase der ersten Stufe erwärmt wird. Für diese Stufe sind insbesondere Erdalkalihexaaluminate als Katalysatoren vorteilhaft.

Die Katalysator-Stufen des Nachbrenners können entweder durch die Abgase eines stromaufwärts angebrachten Startbrenners auf Betriebstemperatur gebracht werden, oder elektrisch beheizt werden, in dem der Katalysatorträger Strom durchflossen ist und so als Widerstandsheizung zur Katalysatorerwärmung wirkt.

## Patentansprüche

1. Nachbrenner (9) eines Brennstoffzellensystems zum Nachverbrennen vom Brennstoffzellen-Restgas mit Hilfe eines Nachbrenner-Katalysators, wobei der Nachbrenner-Katalysator aus zwei Nachbrenner-Katalysatorstufen (12, 8) besteht, die der Zufuhr des Brennstoffzellen-Restgases stromabwärts angeordnet sind und der stufenweise Umsetzung des Brennstoffzellen-Restgases dienen
, **dadurch gekennzeichnet, dass** die erste Nachbrenner-Katalysatorstufe (12) der Umsetzung von Wasserstoff und Kohlenmonoxid und die zweite Nachbrenner-Katalysatorstufe (8) der Umsetzung von Kohlenwasserstoffen aus dem Brennstoffzellen-Restgas dient.

2. Nachbrenner (9) nach Anspruch 1 , **dadurch gekennzeichnet, dass** die Nachbrenner-Katalysatorstufen (12, 8) durch die Abgase eines stromaufwärts angebrachten Startbrenners (1) oder elektrisch beheizt werden.

3. Nachbrenner (9) nach Anspruch 1 oder 2, **dadurch gekennzeichnet, dass** der die Nachbrenner-Katalysatorstufen (12, 8) auf elektrisch leitende Katalysatorträger aufgebracht werden.

4. Nachbrenner (9) nach einem der vorgehenden Ansprüche, **dadurch gekennzeichnet, dass** die Nachbrenner-Katalysatorstufe (12) für die Nachverbrennung von Wasserstoff und Kohlenmonoxid als ein Platin-Katalysator, ein Platin-Palladium-Katalysator, ein Platin-Palladium-Rhodium-Katalysator, ein Platin-Ruthenium-Katalysator, ein Platin-Palladium-Ruthenium-Katalysator oder ein Platin-Palladium-Lanthan-Katalysator ausgebildet ist.

5. Nachbrenner (9) nach einem der vorgehenden Ansprüche, **dadurch gekennzeichnet, dass** die Nachbrenner-Katalysatorstufe (8) für die Nachverbrennung von Kohlenwasserstoffen als ein Erdalkalihexaaluminat-Katalysator, ein Mangan substituiertes Hexaaluminat-Katalysator, ein Rhodium-Perovskite-Katalysator oder ein Aluminium-Borat-Palladium-Katalysator ausgebildet ist.

## Claims

1. Reheater (9) of a fuel cell system for reheating fuel cell tail gas by means of a reheating catalyst, wherein the reheating catalyst consists of two reheating catalyst stations (12, 8), which are arranged downstream of the fuel cell tail gas supply and serve to convert the fuel cell tail gas gradually,
**characterised in that** the first reheating catalyst station (12) serves to convert hydrogen and carbon monoxide and the second reheating catalyst station (8) serves to convert hydrocarbons from the fuel cell tail gas.

2. Reheater (9) according to claim 1, **characterised in that** the reheating catalyst stations (12, 8) are heated either electrically or by the exhaust gases of an ignition heater (1) installed downstream.

3. Reheater (9) according to claim 1 or 2, **characterised in that** the reheating catalyst stations (12, 8) are applied to electrically conductive carriers.

4. Reheater (9) according to one of the preceding claims, **characterised in that** the reheating catalyst station (12) for reheating hydrogen and carbon monoxide is embodied as a platinum catalyst, a platinum-palladium catalyst, a platinum-palladium-rhodium catalyst, a platinum-ruthenium catalyst, a platinum-palladium-ruthenium catalyst or a platinum-palladium-lanthanum catalyst.

5. Reheater (9) according to one of the preceding claims, **characterised in that** the reheating catalyst station (8) for reheating hydrocarbons is embodied as an alkaline earth hexaaluminate, a manganese-substituted hexaaluminate catalyst, a rhodium-perovskite catalyst or an aluminium borate-palladium catalyst.

## Revendications

1. Resurchauffeur (9) d'un système de pile à combustible pour réchauffer des gaz résiduaires de pile à combustible au moyen d'un catalyseur de réchauffage, dans lequel le catalyseur de réchauffage consiste en deux stations de catalyseur de réchauffage (12, 8), qui sont disposées en aval de l'alimentation en gaz résiduaires de la pile à combustible et servent à convertir progressivement les gaz résiduaires de pile à combustible,
**caractérisé en ce que** la première station de catalyseur de réchauffage (12) sert à convertir l'hydrogène et le monoxyde de carbone et la deuxième station de catalyseur de réchauffage (8) sert à convertir les hydrocarbures des gaz résiduaires de la pile à combustible.

2. Resurchauffeur (9) selon la revendication 1, **caractérisé en ce que** les stations de catalyseur de réchauffage (12, 8) sont chauffées électriquement ou par des gaz d'échappement d'un chauffage à ignition (1) disposé en aval.

3. Resurchauffeur (9) selon la revendication 1 ou 2, **caractérisé en ce que** les stations de catalyseur de réchauffage (12, 8) sont appliquées à des conducteurs électriques.

4. Resurchauffeur (9) selon l'une des revendications précédentes, **caractérisé en ce que** la station de catalyseur de réchauffage (12) pour le réchauffage de l'hydrogène et du monoxyde de carbone est réalisée en un catalyseur de platine, un catalyseur de platine-palladium, un catalyseur de platine-palladium-rhodium, un catalyseur de platine-ruthénium, un catalyseur de platine-palladium-ruthénium ou un catalyseur de platine-palladium-lanthane.

5. Resurchauffeur (9) selon l'une des revendications précédentes, **caractérisé en ce que** la station de catalyseur de réchauffage (8) pour le réchauffage des hydrocarbures est réalisée en un hexa aluminium alcalino-terreux, un catalyseur hexa aluminium substitué par du manganèse, un catalyseur rhodium-pérovskite ou un catalyseur aluminium-borate-palladium.
